# FASCICULE DE BREVET EUROPEEN

(11) **EP 3 659 127 B1**
(45) Date de publication et mention de la délivrance du brevet: **17.12.2025**
(21) Numéro de dépôt: 18758936.1
(22) Date de dépôt: 26.07.2018
(51) Int. Cl.: G07G 1/00

(54) **INSTALLATION ET PROCEDE DE GESTION DE DONNEES DE PRODUITS**
ANLAGE UND VERFAHREN ZUR VERWALTUNG VON PRODUKTDATEN
INSTALLATION AND METHOD FOR MANAGING PRODUCT DATA

(30) Priorité: 26.07.2017 FR 1757109; 09.10.2017 WO PCT/FR2017/052752
(43) Date de publication de la demande: 03.06.2020
(60) Demande divisionnaire: 25166431.4
(73) Titulaire: JES, 44800 Saint-Herblain (FR)
(72) Inventeur: JACQUET, Eric, 44100 Nanates (FR)
(74) Mandataire: Ipsilon
(86) Numéro de dépôt international: PCT/FR2018/051916
(87) Numéro de publication internationale: WO 2019/020947

(56) Documents cités:
- EP-A1- 2 570 967
- EP-A2- 3 002 739
- JP-A- 2015 125 479
- JP-A- H07 234 896
- US-A- 5 297 030
- US-A1- 2012 327 202
- US-A1- 2013 256 041
- ALOYSIUS ONG: "Canteen Management System - Point of Sale System", 7 November 2013 (2013-11-07), pages 1, XP054982220, Retrieved from the Internet <URL:https://www.youtube.com/watch?v=6dHxXgi1cP0> [retrieved on 20210914]
- CASH SYSTEMES INDUSTRIE: "CSI - Restauration de Collectivité", 4 March 2015 (2015-03-04), pages 1, XP054982221, Retrieved from the Internet <URL:https://www.youtube.com/watch?v=Psgr1fRl92E> [retrieved on 20210914]
- CONTIDATA DATENSYSTEME GMBH: "contidata Kasse", 27 May 2016 (2016-05-27), pages 1, XP054982222, Retrieved from the Internet <URL:https://www.youtube.com/watch?v=-1ddBPL4YAY> [retrieved on 20210914]
- VILLIET-MARCILLAT (SECR?TAIRE DE SOUS-PR?FECTURE DE GANNAT) ET AL: "Oeuvres de Villiet. I. Th??tre", 27 November 2012 (2012-11-27), XP055420491, Retrieved from the Internet <URL:http://ceaircelle76.org/media/procedure_mone_web__022654400_1019_29112012.pdf> [retrieved on 20171031]

## Description

### DOMAINE DE L'INVENTION

La présente invention concerne de manière générale l'acquisition de données relatives à des produits et le traitement de ces données.

La présente invention trouve une application avantageuse dans le domaine de la restauration collective, mais bien entendu la présente invention peut aussi s'appliquer à d'autres domaines.

### ART ANTERIEUR

Dans le domaine de la restauration collective, les utilisateurs prennent usuellement un plateau repas sur lequel ils déposent différents produits à consommer, puis ils passent en caisse.

Lorsque l'utilisateur est arrivé à la caisse, l'opérateur de caisse identifie et enregistre sur un système informatique, les produits correspondant au contenu du plateau. Les produits enregistrés correspondent à une somme que l'utilisateur doit payer.

Généralement l'utilisateur présente un badge associé à un compte qui est débité du montant de la somme à payer. On constate qu'en moyenne haute, le nombre de passage de plateaux à la minute par opérateur de caisse est faible, de l'ordre de six.

On comprend qu'il est souhaitable de pouvoir diminuer le temps d'attente des utilisateurs au sein de tels restaurants.

On connait de l'état de la technique et notamment des documents EP3038015, US5497314 et WO2013039393, des systèmes permettant d'identifier automatiquement des produits, puis de payer, en espèce ou à l'aide d'une carte de paiement, une somme correspondant à ces produits.

On connait en particulier du document EP2570967A1, une installation comprenant un poste d'acquisition et un poste de validation avant sortie. Les produits choisis par l'utilisateur sont positionnés dans un poste d'acquisition qui prend une image des produits avec leur code-barre. Un processeur est utilisé pour lire les données de chaque code-barre. On notera que cette solution est complexe et onéreuse puisqu'elle nécessite d'appliquer un code-barre sur chaque produit, et selon une orientation adaptée à la prise d'image.

Le risque d'erreur de lecture résultant notamment d'une dégradation du code-barre n'est pas négligeable.

Une telle installation nécessite non seulement que chaque produit soit muni d'un élément d'identification spécifique, tel qu'un code barre, mais, en outre, que l'utilisateur, après avoir présenté ses produits au poste d'acquisition, se déplace avec lesdits produits jusqu'au poste de validation pour effectuer le paiement desdits produits.

Le document US20100076855A1 décrit un système d'achat de produit qui comprend un dispositif d'achat présent dans un point de vente.

La présente invention a pour but de proposer une installation et un procédé permettant de palier à tout ou partie des problèmes exposés ci-dessus.

### RESUME DE L'INVENTION

A cet effet, l'invention a pour objet une installation selon la revendication 1.

Une telle installation permet un traitement asynchrone des données de produits qui ont été acquises avec le poste d'acquisition et mémorisées dans des précommandes, et ainsi de bénéficier d'une fluidité de passage des utilisateurs au niveau du poste d'acquisition.

En particulier, l'installation permet, grâce au poste de traitement, de saisir, dans une commande, des données de produit(s) à partir de données d'une précommande acquises précédemment à l'aide du poste d'acquisition.

Après la génération et la mémorisation d'une précommande dans la mémoire de précommande à l'aide du poste d'acquisition, le poste de traitement peut agir sur une commande correspondante formée à partir de la précommande, indépendamment du fonctionnement du poste d'acquisition qui peut être utilisé par un utilisateur suivant pour générer une précommande suivante. Une telle installation permet ainsi de bénéficier d'une continuité de service, en évitant notamment que l'utilisateur ait à se rendre au poste de traitement pour finaliser son achat, sauf cas particulier.

Le poste d'acquisition peut générer rapidement des précommandes, tandis qu'un opérateur peut, depuis le poste de traitement, traiter à son rythme les données de précommande pour former des commandes correspondantes en ajoutant des données de produit(s) de référence dans lesdites commandes à l'aide des éléments de sélection correspondant de l'interface de traitement de précommandes.

La ou chaque image affichée dans la zone d'affichage correspondante de l'interface de traitement permet à l'opérateur de déterminer le produit de référence qui correspond à un produit présent dans l'image. L'opérateur peut alors actionner l'élément de sélection correspondant, afin d'ajouter à une commande générée à partir de la précommande des données du produit de référence correspondant et afficher ces données du produit de référence dans la zone de commande de l'interface de traitement. L'actionnement de l'élément de sélection peut s'effectuer par exemple en cliquant sur ledit élément de sélection à l'aide d'une souris ou en appuyant sur une zone correspondante de l'écran lorsque celui présente une interface tactile.

Ainsi, dans le cas d'une application à la restauration où le poste d'acquisition est utilisé entre la zone de distribution des produits et la zone de restauration, la fonction de traitement asynchrone, par le poste de traitement, des données liées aux produits qui ont été acquises par le poste d'acquisition, permet d'optimiser la fluidité du passage des utilisateurs de la zone de distribution des produits vers la zone de restauration.

Une telle conception de l'installation offre une fonction de débrayage au sens où il est possible de suspendre le traitement des précommandes par le poste de traitement, tandis que le poste d'acquisition peut continuer à générer des précommandes qui sont enregistrées dans une mémoire informatique accessible au poste de traitement.

Le fait de pouvoir ajouter des données dans une commande, qui comprend au moins une partie des données de la précommande, permet de construire progressivement la commande, sans avoir à se soucier du fonctionnement du poste d'acquisition.

En particulier, le traitement asynchrone, par le poste de traitement, des données acquises par le poste d'acquisition, permet de limiter le temps de passage, au niveau du poste d'acquisition, de l'utilisateur associé au plateau et ainsi d'atteindre un nombre de passage de plateaux à la minute par poste d'acquisition de l'ordre de douze, sachant qu'il est possible d'associer plusieurs postes d'acquisition pour augmenter encore le nombre de passage de plateaux à la minute.

Un tel découplage de l'acquisition des données relatives aux produits apportés par les utilisateurs au niveau du poste d'acquisition, et de leur traitement par un opérateur au niveau du poste de traitement, permet aussi de bénéficier d'un contrôle visuel a posteriori grâce à l'affichage déporté au niveau du poste de traitement des images acquises par le poste d'acquisition.

Le stockage des données d'une commande dans une mémoire permet de construire la commande dans cette mémoire, à partir de données de précommande issues du poste d'acquisition et de données complémentaires générées et ajoutées à l'aide du poste de traitement.

Une telle configuration de l'installation permet de construire simplement, rapidement et de manière fiable les données d'une commande.

Les opérations réalisées à partir des données de précommande comprennent des opérations d'ajout de données relatives aux produits identifiés à partir des images de la précommande pour introduire dans la commande des données de valeurs, telles que le prix des produits à payer, utiles au processus de paiement.

Les images affichées dans la zone d'affichage de l'interface du poste de traitement permettent à l'opérateur de déterminer le produit de référence qui correspond à un produit présent dans une image affichée. L'opérateur peut alors actionner l'élément de sélection correspondant, afin d'ajouter à une commande, générée à partir de la précommande, des données du produit de référence correspondant et afficher ces données du produit de référence dans la zone de commande de l'interface de traitement.

Les données ajoutées sont ainsi associées aux images correspondantes de la précommande et sont utilisées pour définir une valeur correspondant au prix à payer. Ces caractéristiques d'ajout de données qui sont liées aux images permettent l'aboutissement de la transaction, puisque le poste d'acquisition ne fournit pas de données correspondant à des valeurs de prix associées aux produits dont les images sont acquises.

Contrairement à la solution du document EP2570697A1, la solution selon l'invention permet d'éviter d'avoir à munir les produits de code-barre, ce qui serait complexe, onéreux et source d'erreur.

A l'inverse la solution selon l'invention permet de se passer de tels codes-barres à l'aide de la mémoire de précommande et en proposant, au niveau du poste de traitement, une interface qui permet de charger les images à partir de données de précommande et de construire un ensemble de données de commande comprenant au moins une partie des données de précommande et des données supplémentaires, ajoutées à l'aide de l'interface du poste de traitement, qui sont utiles à la transaction. En particulier, les éléments de sélection permettent d'ajouter, dans les données de commande associées aux données de précommande, les données des produits de référence qui correspondent à ceux présents sur les images chargées dans l'interface.

Le poste d'acquisition peut ainsi générer rapidement des précommandes, tandis qu'un opérateur peut, depuis le poste de traitement, traiter à son rythme les données de précommande pour former des commandes correspondantes en ajoutant des données de produit(s) de référence dans lesdites commandes à l'aide des éléments de sélection correspondant de l'interface de traitement de précommande.

Le fait de pouvoir ajouter des données dans une commande, qui comprend au moins une partie des données de la précommande à l'aide du poste de traitement, permet de construire progressivement la commande, sans être soumis à un risque d'erreur de lecture de code-barre comme dans le document EP2570967A1.

Selon une caractéristique avantageuse de l'invention, l'installation comprend une base de données de comptes utilisateurs dans laquelle sont enregistrées des données de comptes utilisateurs, chaque compte utilisateur comprenant :
- un identifiant d'un utilisateur ;
- une valeur de solde, créditeur ou débiteur ;
et le dispositif de pilotage est configuré pour déterminer si l'identifiant de l'utilisateur acquis correspond à l'identifiant de l'utilisateur d'un compte utilisateur enregistré.

Le fonctionnement du poste d'acquisition ou l'autorisation de quitter l'installation peut être conditionné au fait que l'identifiant de l'utilisateur acquis corresponde bien à un compte utilisateur enregistré, et éventuellement à d'autres caractéristiques dudit compte utilisateur, par exemple relatives au solde. Autrement, il peut être prévu que l'utilisateur soit invité, par exemple par un message affiché sur un écran, à se diriger vers une autre installation ou à se diriger vers un poste de traitement de l'installation.

Selon une caractéristique avantageuse de l'invention, chaque compte utilisateur comprend une information de droit d'utilisation pour indiquer si l'utilisateur associé au compte utilisateur est autorisé ou non à utiliser ledit poste d'acquisition ou l'installation, et le dispositif de pilotage est configuré pour, après avoir déterminé si le compte utilisateur correspond à l'identifiant de l'utilisateur acquis, autoriser ou non l'utilisation du poste d'acquisition ou de l'installation en fonction de l'information de droit d'utilisation associée audit compte utilisateur.

Selon un aspect particulier, une commande comprend l'identifiant de l'utilisateur correspondant et une valeur correspondant au prix de vente dudit produit ou ensemble de produits.

Selon une caractéristique avantageuse de l'invention, l'installation comprend une mémoire dans laquelle sont mémorisés des ensembles de données appelés tickets, chaque ticket comprenant au moins une partie des données d'une commande et/ou une partie des données de la précommande associée, et au moins une partie des données d'un ticket associé à un utilisateur est accessible depuis un terminal.

Le poste d'acquisition est configuré pour fonctionner indépendamment du poste de traitement.

Le poste de traitement est configuré pour permettre de traiter des précommandes générées, indépendamment de la poursuite ou de l'arrêt de fonctionnement du poste d'acquisition.

Ledit poste de traitement est configuré pour permettre de basculer entre l'interface de traitement de précommandes et une autre interface, dite interface de saisie directe, dans laquelle aucune image de produit(s) acquise par le poste d'acquisition n'est affichée,
ladite unité de traitement étant configurée pour, lors d'une utilisation de l'interface de saisie directe, générer un ensemble de données, appelé commande directe, qui inclut au moins une donnée d'un produit de référence correspondant à un élément de sélection sollicité par l'opérateur.

Selon une caractéristique avantageuse de l'invention, l'unité de traitement est configurée pour, lorsque l'identifiant d'un utilisateur est saisi ou détecté, et qu'une précommande est associée audit identifiant, sélectionner automatiquement ladite précommande en affichant les données d'identification et d'image correspondantes dans l'interface de traitement de précommandes.

Selon une caractéristique avantageuse de l'invention, ledit poste de traitement est configuré pour permettre à l'opérateur d'agir sur l'image, par exemple en zoomant ou en naviguant dans l'image.

Selon une caractéristique avantageuse de l'invention, chaque précommande comprend une information d'état de la précommande indiquant si la précommande est :
- à traiter ; ou
- en cours de traitement, ou
- traitée ;
et le poste de traitement est configuré pour filtrer les précommandes à afficher dans l'interface de traitement en fonction de leur statut.

Selon une caractéristique avantageuse de l'invention, chaque produit de référence comprend une donnée de dénomination du produit, une donnée de prix et une donnée de quantité, ladite unité de traitement du poste de traitement est configurée pour ajouter ces données de dénomination du produit, de prix et de quantité dans la commande lorsque ledit produit de référence est sélectionné dans l'interface de traitement de précommandes.

Selon une caractéristique avantageuse de l'invention, ladite précommande comprenant aussi, pour chaque image, une donnée de position relative du produit ou de l'ensemble de produits par rapport à ladite image,
ledit poste de traitement est configuré pour afficher dans la zone d'image de l'interface de traitement une vue agrandie de ladite image en fonction de ladite donnée de position.

Selon une caractéristique avantageuse de l'invention, le poste d'acquisition comprenant un écran d'affichage et le dispositif d'acquisition d'images comprenant une caméra, l'unité de pilotage est configurée pour :
- déclencher l'affichage à l'écran de l'image filmée par la caméra lorsque l'insertion du produit ou de l'ensemble de produits au niveau de la surface de pose est détectée ;
- déclencher l'arrêt de l'affichage de l'image filmée lorsque le produit ou l'ensemble de produits est retiré de la surface de pose.

Selon une caractéristique avantageuse de l'invention, le poste de traitement est configuré pour permettre de modifier les commandes correspondant aux précommandes traitées.

Selon une caractéristique avantageuse de l'invention, l'installation comprend plusieurs postes de traitement et/ou plusieurs postes d'acquisition.

L'invention concerne également un procédé de gestion de données de produits, mis en œuvre à l'aide d'une installation telle que décrite ci-dessus,
caractérisé en ce que le procédé comprend la génération de précommandes à l'aide du poste d'acquisition,
et en ce que le procédé comprend, à l'aide du poste de traitement, les étapes suivantes :
   - afficher une image d'une précommande dans la zone d'affichage d'images de l'interface de traitement ;
   - à l'aide des éléments de sélection de l'interface de traitement du poste de traitement, ajouter dans une commande associée à la précommande, des données d'un produit de référence correspondant à un produit présent dans l'image affichée.

Selon une caractéristique avantageuse de l'invention, les étapes réalisées à l'aide du poste de traitement sont réalisées de manière asynchrone par rapport à celle(s) réalisée(s) avec le poste d'acquisition.

Selon une caractéristique avantageuse de l'invention, le dispositif de pilotage est aussi configuré pour, après que l'identifiant a été associé aux images acquises, commander un dispositif d'autorisation de sortie ou d'indication pour permettre ou indiquer à l'utilisateur de reprendre son ou ses produits.

Selon une caractéristique avantageuse de l'invention, le poste d'acquisition comprend un système d'éclairage permettant d'éclairer la surface de pose.

Selon une caractéristique avantageuse de l'invention, le poste d'acquisition comprend une face de fond qui s'étend sensiblement orthogonalement à la surface de pose du plateau. La face de fond est configurée de manière à offrir une meilleure diffusion de la lumière issue du système d'éclairage, par comparaison avec la surface de pose.

En particulier, la diffusion de la lumière par la face de fond permet d'améliorer l'homogénéité de la répartition de l'éclairage au niveau dudit au moins produit en limitant l'importance des zones d'ombre et en limitant la présence de reflets lumineux.

La surface de pose est choisie de manière à diffuser la lumière reçue le moins possible pour limiter le renvoi de la lumière, issue du système d'éclairage, vers les dispositifs d'acquisition d'image en regard desquels ladite surface de pose se situe et assurer un contraste suffisant avec lesdits produits à identifier.

Selon une caractéristique avantageuse de l'invention, le poste d'acquisition comprenant une face de fond qui s'étend sensiblement orthogonalement à la surface de pose, le dispositif d'acquisition d'images comprend un premier appareil d'acquisition d'images dont l'axe optique est orienté verticalement, et deux autres appareils d'acquisition d'images disposés de part et d'autre d'un plan passant par l'axe optique du premier appareil d'acquisition d'images et perpendiculaire à la face de fond du poste d'acquisition.

Un tel agencement des appareils d'acquisition d'images, qui comprennent par exemple des caméras, permet d'obtenir des images sous différents angles pour identifier de manière fiable le ou les produits présents. En particulier, un tel agencement permet d'identifier efficacement avec au moins l'un des appareils d'acquisition d'images, un produit qui serait masqué par un autre produit dans le champ d'un autre dispositif d'acquisition d'image.

Le deuxième et le troisième appareils d'acquisition d'image sont de préférence orientés de sorte que leurs axes optiques forment un angle compris entre 40° et 50°, de préférence 45°, avec la verticale.

Selon une caractéristique avantageuse de l'invention, le dispositif d'acquisition d'images comprenant un ou des capteurs CCD, le dispositif de pilotage est configuré pour détecter la luminosité ambiante, et régler la sensibilité du ou des capteurs CCD en fonction de la luminosité ambiante mesurée.

Selon une caractéristique avantageuse de l'invention, le dispositif d'acquisition d'images permettant de fournir un flux vidéo, le dispositif de pilotage est configuré pour :
- détecter l'introduction dudit produit ou ensemble de produits au niveau de la surface de pose ;
- afficher à l'écran, la vidéo du produit ou de l'ensemble de produits présent au niveau de la surface de pose, ainsi que des informations définies en fonction de la position du produit ou de l'ensemble de produits par rapport à la surface de pose pour indiquer si le produit ou l'ensemble de produits est correctement positionné.

Selon une caractéristique avantageuse de l'invention, pour réaliser l'étape d'acquisition d'images, le dispositif de pilotage est configuré pour extraire une image dudit flux vidéo acquis.

Selon une caractéristique avantageuse de l'invention, le dispositif de pilotage est configuré pour, à partir des images du flux vidéo et en fonction d'au moins une règle prédéfinie, déterminer si le produit ou l'ensemble de produits est ou non correctement positionné relativement à la surface de pose.

Selon une caractéristique avantageuse de l'invention, le dispositif de pilotage est configuré pour autoriser ou non l'acquisition de l'identifiant utilisateur à l'aide du dispositif d'identification, en fonction de l'état de positionnement dudit produit ou ensemble de produits par rapport à la surface de pose.

Selon une caractéristique avantageuse de l'invention, le dispositif de pilotage est configuré pour déclencher l'acquisition des images dudit produit ou ensemble de produits en fonction de caractéristiques de l'identifiant utilisateur acquis.

Selon un aspect particulier, la face de fond absorbe moins la lumière naturelle que la surface de pose. Préférentiellement, le système d'éclairage émet une lumière de type lumière de jour, par exemple de température de couleur de l'ordre de 6400°K. La lumière émise par le système d'éclairage est donc moins absorbée par la face de fond que par la surface de pose. La face de fond est mate pour une bonne diffusion de lumière et ainsi une homogénéité de l'éclairage. Avantageusement, la surface de pose est mate pour éviter l'apparition d'éclats.

Selon une caractéristique avantageuse de l'invention, le système d'éclairage comprend des dispositifs d'éclairage et un dispositif de diffusion de la lumière, telle qu'une plaque translucide, par exemple en plexiglass.

La diffusion de la lumière par le dispositif de diffusion permet d'obtenir une répartition homogène de la lumière et de limiter la présence d'ombre et/ou de reflet brillant qui pourraient apparaitre sur les images et gêner leur exploitation.

Selon une caractéristique avantageuse de l'invention, le dispositif de diffusion de la lumière présente une face, orientée vers la surface de pose, qui est courbe.

La courbure de la face du dispositif de diffusion qui est orientée vers la surface de pose, favorise la bonne répartition du flux lumineux au niveau du ou de l'ensemble de produits à identifier.

Selon une caractéristique avantageuse de l'invention, la surface de pose est formée d'une seule pièce et présente, du côté de la face de fond, un bord relevé limitant le risque d'infiltration dans le poste d'acquisition.

Selon une caractéristique avantageuse de l'invention, le poste d'acquisition comprenant une chambre dans laquelle est logé le système d'éclairage, ladite chambre s'étend au-dessus et à écartement de la surface de pose, ladite chambre présentant une partie avant de plus grande largeur que celle de la surface de pose.

Selon une caractéristique avantageuse de l'invention, ledit poste d'acquisition comporte un système de communication avec l'utilisateur, de préférence interactif, comprenant un dispositif d'affichage permettant notamment d'afficher une image dudit au moins un produit.

L'installation permet ainsi de pouvoir réduire le temps de passage des utilisateurs tout en bénéficiant d'images des produits qui soient exploitables de manière fiable pour pouvoir identifier ou aider à identifier correctement ces produits.

Dans le cas d'une restauration collective où ledit produit ou ensemble de produits correspond au contenu d'un plateau, l'installation permet d'accélérer et de fluidifier le passage au niveau de la caisse formée par l'installation.

Selon un mode de réalisation particulier, l'installation est dépourvue de moyens de reconnaissance automatique de caractéristiques, telles qu'un code relatif à un prix, du ou des produits dont une ou des images sont acquises au niveau du poste d'acquisition. Les informations liées au ou à chaque produit sont fournies par le poste de traitement à l'aide des éléments de sélection de l'interface correspondante destinés à être sollicités par un opérateur de manière asynchrone par rapport à la génération des précommandes.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue schématique d'une installation conformément à un mode de réalisation de l'invention ;
- la figure 2 est une vue schématique d'un ensemble de données correspondant à une précommande conformément à un mode de réalisation de l'invention ;
- la figure 3 est une vue schématique d'un ensemble de données correspondant à une commande conformément à un mode de réalisation de l'invention ;
- la figure 4 est une vue schématique d'un ensemble de données correspondant à un ticket conformément à un mode de réalisation de l'invention ;
- la figure 5 est une vue schématique d'une interface de traitement de précommandes d'un poste de traitement conformément à un mode de réalisation de l'invention ;
- la figure 6 est une vue schématique d'une interface de saisie directe d'un poste de traitement conformément à un mode de réalisation de l'invention ;
- la figure 7 est une capture d'écran de téléphone d'un utilisateur sur lequel sont affichées des informations d'un ticket correspondant à une commande de l'utilisateur conformément à un mode de réalisation de l'invention ;
- la figure 8 est une capture d'écran d'un écran de téléphone d'un utilisateur sur lequel est affichée une image associée aux informations du ticket de la figure 7 ;
- la figure 9 est une vue en perspective du poste d'acquisition d'une installation conformément à un mode de réalisation de l'invention, une partie de l'habillage du poste d'acquisition étant retirée pour montrer le système d'éclairage et les dispositifs d'acquisition d'images ;
- la figure 10 est une vue éclatée du poste d'acquisition d'une installation conformément à un mode de réalisation de l'invention, le système d'éclairage n'étant pas représenté.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes.

Une référence dans toute la description à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

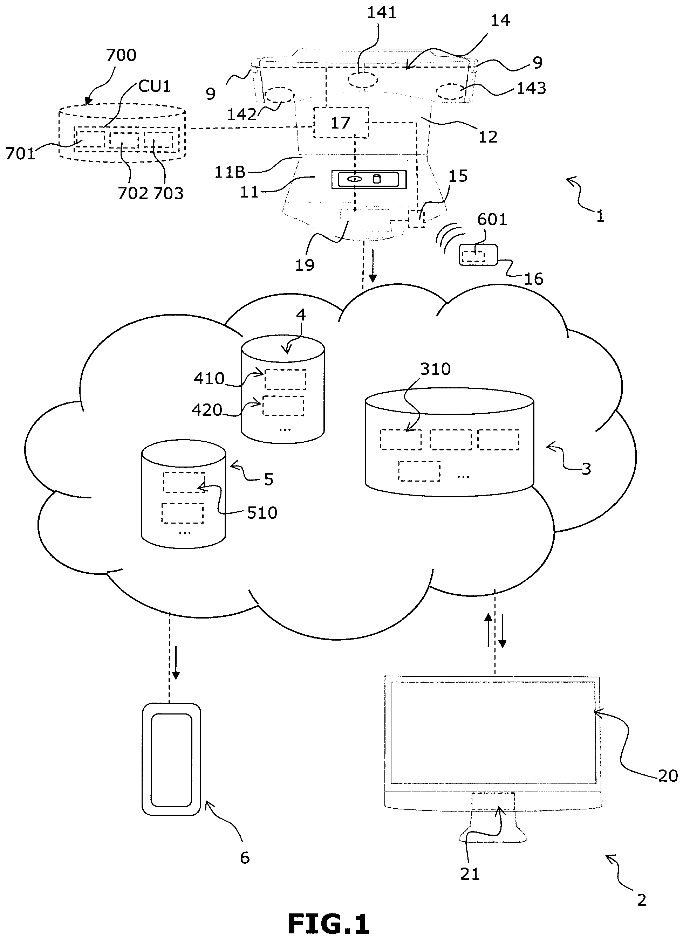

La figure 1 illustre de manière schématique une installation conforme à un mode de réalisation de l'invention. L'installation comprend un poste 1 d'acquisition. Un exemple de poste 1 d'acquisition est décrit dans la demande internationale publiée sous le numéro WO2018073510 (A1) dont le contenu est dans son intégralité incorporé par référence dans la présente demande.

Selon un mode de réalisation particulier, l'installation comprend plusieurs postes d'acquisition qui peuvent fonctionner en parallèle les uns des autres. Ainsi la description ci-après est réalisée pour un poste 1 d'acquisition mais s'applique bien entendu à une configuration d'installation dans laquelle il y a plusieurs postes d'acquisition.

Le poste 1 d'acquisition permet à plusieurs utilisateurs successifs, d'acquérir des informations relatives à un produit ou ensemble de produits de chaque utilisateur. On entend par produit un objet concret, de type comestible ou non, que l'utilisateur peut manipuler.

Selon un mode de réalisation et comme dans l'exemple illustré aux figures, le produit ou ensemble de produits comprend le contenu d'un plateau repas. Le produit ou ensemble de produits peut être considéré comme étant le contenu du plateau et le plateau lui-même, du fait que l'image du plateau est destinée à être acquise en même temps que son contenu, quand bien même l'on cherche à permettre à l'opérateur du poste de traitement 2 (présenté ci-après) de saisir des données correspondant au contenu du plateau. Pour autant et selon un aspect particulier, le plateau et en particulier son positionnement relatif au poste d'acquisition 1 peut être utilisé pour piloter le fonctionnement du poste d'acquisition 1.

De même, comme détaillé ci-après, le plateau, en particulier son contour, peut servir de repère lors de l'affichage d'une image dans l'interface de traitement 200 (présentée ci-après) du poste de traitement 2. Bien entendu, la suite de la description est aussi applicable au cas où le produit ou ensemble de produits est un produit ou ensemble de produits autre que le contenu d'un plateau repas.

Le poste 1 d'acquisition comprend une surface de pose 11 permettant à l'utilisateur de poser son plateau repas. Le poste d'acquisition peut comprendre des moyens de repérage, par exemple visuels et/ou matériels pour positionner le plateau. Comme expliqué ci-après, on peut aussi prévoir qu'un écran d'affichage affiche l'image du plateau et indique le positionnement du plateau à atteindre à l'utilisateur, par exemple en affichant un contour à l'intérieur duquel l'image du plateau doit se situer.

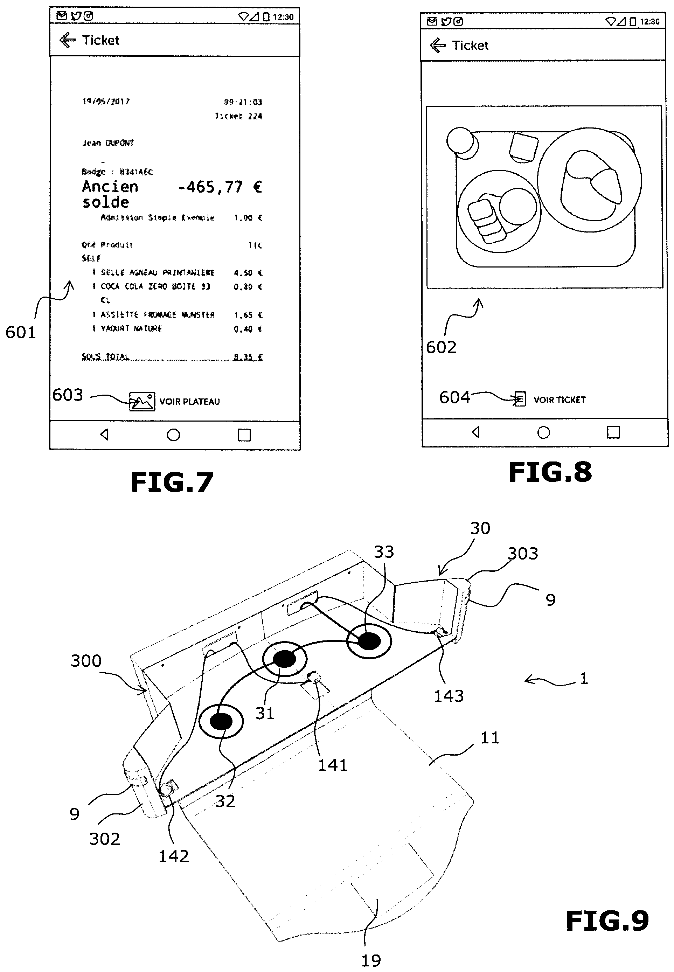

Selon un mode de réalisation, le poste comprend un système d'éclairage 30, permettant d'éclairer la surface de pose du plateau. Comme illustré à la figure 9, le système d'éclairage 30 est disposé au-dessus de la surface de pose 11 du plateau.

Un dispositif 14 d'acquisition d'images est orienté vers la surface de pose 11. Dans l'exemple illustré aux figures, le dispositif 14 d'acquisition d'images comprend plusieurs appareils d'acquisition d'images 141, 142, 143 configurés pour prendre une image d'un plateau et de son contenu à chaque passage d'utilisateur.

En particulier l'utilisation de plusieurs appareils d'acquisition d'images permet de bénéficier d'images du ou de l'ensemble de produits selon différents angles et ainsi d'identifier de manière fiable ledit produit ou ensemble de produits. Ainsi selon un mode de réalisation, les appareils 141, 142, 143 d'acquisition d'image sont orientés vers la surface de pose 11 du plateau selon des directions optiques différentes afin de pouvoir acquérir des images du plateau selon différents angles.

Selon un aspect particulier, chaque appareil d'acquisition d'image est une caméra CCD. Ainsi, dans la suite de la description, chaque appareil d'acquisition d'images est une caméra, mais la description s'applique aussi à d'autres types d'appareil d'acquisition d'images, et en particulier à des caméras autres que des caméras CCD.

En variante, le dispositif d'acquisition peut comprendre un autre nombre d'appareils, par exemple un seul appareil d'acquisition d'images. Préférentiellement, le ou chaque appareil d'acquisition d'images est une caméra qui permet de filmer et/ou photographier la zone correspondant à la surface de pose 11 et d'acquérir, pour chaque utilisateur, une image du plateau et de son contenu.

Le poste d'acquisition 1 comprend une face de fond 12 qui s'étend sensiblement orthogonalement à la surface de pose 11 du plateau. La face de fond 12 est choisie de manière à présenter une meilleure diffusion de la lumière issue du système d'éclairage par rapport à la surface de pose 11. Préférentiellement, la face de fond 12 est mate, par exemple blanc mat. Selon un mode de réalisation, la surface de pose 11 est plus foncée que la face de fond 12. Selon un mode de réalisation préféré, la surface de pose 11 est de couleur grise pour permettre de distinguer de manière fiable la surface de pose du contenu du plateau et du plateau lui-même.

Le système d'éclairage 30 comprend des dispositifs d'éclairage 31, 32, 33 et un dispositif de diffusion 34 de la lumière, telle qu'une plaque translucide, par exemple en plexiglass. Avantageusement, les dispositifs d'éclairage sont agencés en triangle ou en arc de cercle.

Selon un mode de réalisation, le dispositif de diffusion 34 de la lumière présente une face, orientée vers la surface de pose 11 du plateau, qui est courbe.

Avantageusement, la surface de pose 11 du plateau est formée d'une seule pièce et présente, du côté de la face de fond 12, un bord relevé 11B limitant le risque d'infiltration dans le poste. Le côté de la face de fond 12 est le côté de la base qui est opposé à là zone où se situe le porteur du plateau lorsqu'il se présente en face du poste d'acquisition.

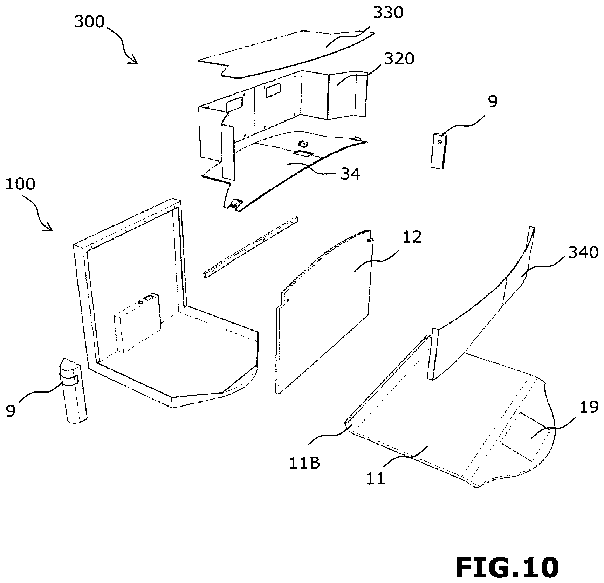

Comme illustré aux figures 9 et 10, le poste d'acquisition 1 comprend une chambre 300 dans laquelle sont logés les dispositifs d'éclairage 31, 32, 33 et les appareils d'acquisition d'image 141, 142, 143.

Ladite chambre 300 s'étend au-dessus et à écartement de la surface de pose 11 du plateau. La chambre 300 et la surface de pose définissent entre elles un espace d'insertion du plateau, ouvert latéralement et en face avant, par opposition à la face de fond.

Ladite chambre 300 présente une partie avant de plus grande largeur que celle de la surface de pose. La largeur de ladite chambre 300 correspond à une dimension prise suivant une direction parallèle à l'axe qui relie les faces latérales ouvertes du poste par opposition à la hauteur et à la profondeur dudit poste.

A cet effet, la partie avant de la chambre 300 comprend une paroi de dessus 330 et des parois 320, 340 périphériques, avec en particulier des parties latérales, appelées oreilles 302, 303 permettant de maximiser les différents angles de prise de vue et la surface d'éclairage tout en minimisant le volume nécessaire à l'intégration et l'impact visuel. La face de diffusion 34 forme la face de dessous de ladite chambre 300.

Comme illustré à la figure 10, le poste d'acquisition 1 comprend un châssis 100. Le châssis 100 est en forme d'équerre et de préférence d'un seul tenant pour assurer la rigidité de tous les éléments et permettre tout type d'implémentation : posé sur ou intégré à un meuble, posé sur pied ou mât, ou fixé au mur.

Un espace est délimité entre le châssis 100 et la face de fond 12 et/ou surface de pose pour permettre l'intégration de l'ensemble des éléments techniques au sein des structures pour éviter que des câbles ou connectiques soient apparents et puissent générer des problèmes de sécurité et/ou d'hygiène.

Un bornier sécurisé (pour limiter l'accès intempestif à la connectique) permet de connecter le poste d'acquisition aux périphériques externes et au réseau sans ouverture du poste tout en protégeant l'accès contre des manipulations abusives.

Avantageusement, la face de fond 12 et/ou la surface de pose 11 sont amovibles par rapport au châssis 100. Le fait de prévoir que la base et/ou la face de fond est au moins en partie démontable et donc échangeable permet de faciliter le nettoyage du poste 1. Le fait que la face 12 et/ou surface de pose 11 soit démontable au moins en partie permet aussi de facilement accéder aux composants actifs du poste, ce qui simplifie la maintenance.

Le poste d'acquisition se présente sous la forme d'une structure dont les faces latérales et la face avant sont ouvertes pour pouvoir introduire et retirer le plateau de manière fluide.

Ledit poste d'acquisition 1 comprend un système de communication avec l'utilisateur, de préférence interactif. Le système de communication comprend un écran d'affichage 19 et une interface de communication interactive avec l'utilisateur. L'interface de communication interactive comprend par exemple une couche tactile de l'écran, et/ou un microphone et/ou un haut-parleur. Avantageusement, ledit dispositif d'affichage est un écran tactile, permettant par exemple à l'utilisateur de visualiser l'état de positionnement de son plateau par rapport à une zone de pose du plateau, et éventuellement de valider et/ou de corriger des informations en cas de reconnaissance automatique des produits présents sur le plateau.

Dans l'exemple illustré aux figures, la partie avant inférieure du poste qui reçoit l'écran d'affichage 19 présente un plan adapté par son inclinaison et ses formes incurvées pour une bonne accessibilité de l'utilisateur. Une telle conception permet d'éviter les reflets, et rend le poste accessible aux personnes handicapées.

Ledit poste comprend un système de refroidissement par convection naturelle qui est agencé pour le refroidissement d'au moins une partie du dispositif de pilotage. Le système de refroidissement par convection naturelle permet d'éviter l'ajout de ventilateur afin de réduire la consommation d'énergie, du bruit et des risques de pannes. Avantageusement, le système de refroidissement est intégré entre le châssis et la face de fond 12, et comprend avantageusement une grille d'accès d'air en bas et en haut.

L'installation comprend une base de données 700 de comptes utilisateurs qui comprend des données de comptes utilisateurs prédéfinis. La base de données 700 de comptes utilisateurs est locale ou déportée par rapport au poste 1. La base de données 700 se présente sous la forme d'une mémoire qui peut être au moins en partie commune avec tout ou partie des autres mémoires présentées ci-après ou physiquement distincte. Dans l'exemple illustré à la figure 1, un seul compte utilisateur CU1 est schématisé, mais bien entendu plusieurs comptes utilisateurs non représentés sont définis dans la base de données 700.

Selon un aspect particulier, chaque compte utilisateur CU1 comprend un identifiant d'un utilisateur 701 du compte et une valeur de solde 702 du compte, créditeur ou débiteur. Selon un mode de réalisation préféré, chaque compte est un compte monétique privatif.

Selon un aspect particulier, chaque compte utilisateur CU1 comprend aussi d'autres informations, telles qu'une information de droit d'utilisation 703. L'information de droit d'utilisation 703 est par exemple une information indiquant si l'utilisateur est autorisé ou non à utiliser ledit poste d'acquisition ou l'installation. On peut en effet prévoir qu'un utilisateur soit autorisé à accéder à un poste donné présent dans un restaurant, mais pas à un autre poste qui serait présent dans un autre restaurant.

L'information d'utilisation peut comprendre une ou plusieurs données permettant au dispositif de pilotage (présenté ci-après) :
- de valider le droit général d'utilisation du poste parmi plusieurs postes, et/ou
- de vérifier le statut du compte : par exemple « valide », « clôturé »,
- le cas échéant, de vérifier le statut du support matériel de l'identifiant utilisateur (tel qu'un badge) : par exemple « perdu », « actif », ou « inactif »

Le dispositif de pilotage commande l'affichage de message à l'écran en fonction de ces données.

Avantageusement, le compte utilisateur comprend une donnée correspondant au nombre de passage autorisé, c'est-à-dire au nombre de fois que le cycle d'acquisition d'identifiant et d'acquisition d'images peut être effectué avant que le compte ne soit débité. Ainsi, on peut prévoir que le dispositif de pilotage empêche l'exécution d'un nouveau cycle lorsque le nombre de passage autorisé est atteint et tant que le compte n'est pas débité, et que le dispositif de pilotage commande l'affichage à l'écran d'un message correspondant.

Ainsi, lorsque ce nombre de passage est fixé à 1, l'utilisateur ne peut passer qu'un seul plateau au niveau du poste, ce qui évite que l'utilisateur passe un nombre indéterminé de plateaux alors que son compte n'est pas suffisamment approvisionné. En effet le compte étant débité de manière désynchronisée par rapport au cycle d'étapes d'acquisition et d'association effectué au niveau du poste, la prise en compte d'un nombre de passage autorisé donné, combiné à la prise en compte d'une valeur de seuil de solde permettant d'utiliser le poste d'acquisition ou l'installation, permet de réduire les cas d'utilisation frauduleux de l'installation.

Selon un mode de réalisation, chaque compte utilisateur comprend aussi une information relative au(x) poste(s) auxquels l'utilisateur peut ou non accéder. A titre d'exemple, on peut prévoir que cette information est un identifiant de poste auquel l'utilisateur peut accéder.

Un dispositif d'identification 15 permet d'identifier l'utilisateur. Selon un mode de réalisation, ledit dispositif d'identification 15 comprend un lecteur de badge permettant de lire un identifiant 601 contenu dans un badge 16 de l'utilisateur. A titre d'exemple, le lecteur de badge est un lecteur sans contact. Bien entendu, l'identifiant utilisateur pourrait être obtenu autrement que par lecture d'un badge.

En variante, le dispositif d'identification 15 peut être un dispositif configuré pour communiquer avec le téléphone de l'utilisateur pour récupérer l'identifiant utilisateur ou peut être tout autre type d'appareil permettant de collecter un identifiant par exemple de type électronique, ou des informations biométriques.

Un dispositif de pilotage 17 est configuré pour acquérir l'identifiant de l'utilisateur, et acquérir une image dudit plateau et de son contenu avec chacun des appareils 141, 142, 143 du dispositif 14 d'acquisition d'images. Ainsi dans l'exemple illustré aux figures, l'utilisateur peut passer son badge 16 devant le lecteur 15 qui lit alors l'identifiant associé, ce qui permet de déclencher une prise d'image par chaque appareil 141, 142, 143. Un tel mode de réalisation permet d'optimiser le temps de passage sur le poste et l'ergonomie du poste. Le nombre d'actions à réaliser par l'utilisateur est réduit et l'utilisateur bénéficie du confort associé au fait de s'identifier après avoir déposé son plateau. En outre, le traitement des données s'effectue de manière fluide puisqu'il n'est pas interrompu.

Le dispositif de pilotage communique aussi avec la base de données 700 de comptes utilisateurs dont il reçoit les données de comptes utilisateurs.

Le dispositif de pilotage peut ainsi comparer l'identifiant de l'utilisateur acquis avec les données de compte utilisateur pour déterminer s'il existe un compte utilisateur enregistré correspondant audit identifiant utilisateur. Dans l'affirmative, le dispositif de pilotage peut comparer l'identifiant du poste qu'il a en mémoire avec l'identifiant de poste associé au compte utilisateur pour déterminer si l'utilisateur a le droit de se servir de ce poste.

Les images de l'ensemble de produits acquises par les caméras 141, 142, 143 sont associées dans une base de données 3, appelée base de données de précommandes, avec l'identifiant de l'utilisateur, après avoir vérifié que l'identifiant utilisateur 601 acquis correspond bien à l'identifiant utilisateur 701 d'un compte utilisateur prédéfini dans la première base de données 700. **Il** est fait référence à l'association des images à l'identifiant utilisateur 701, mais bien entendu il pourrait être fait référence à l'identifiant utilisateur 601 qui correspond à l'identifiant utilisateur 701. L'ordre dans lequel les images et l'identifiant 601 sont acquis peut varier suivant les modes de réalisation. Différents modes de réalisation sont présentés ci-après. Les images et l'identifiant 701 font ainsi partie ou constituent un ensemble de données, encore appelé précommande, qui peut être utilisé pour gérer l'achat dudit ensemble de produits. Une précommande est ainsi mémorisée dans la base de données 3 à chaque passage d'un utilisateur au niveau du poste.

On comprend que les images et identifiant peuvent être mémorisés en étant copiés directement dans la base de données 3 ou à l'aide d'une donnée de renvoi, par exemple un lien d'accès à une image stockée ailleurs que dans la mémoire de la base de données. Selon un aspect particulier, les images peuvent subir des traitements entre leur acquisition et leur mémorisation dans la base de données 3.

Ainsi, la deuxième base de données 3 comprend des ensembles de données qui incluent, pour chaque identifiant utilisateur acquis auquel correspond un identifiant utilisateur d'un compte utilisateur, les images acquises qui sont associées audit identifiant utilisateur. Il est ainsi possible de retrouver par la suite les images acquises à partir de l'identifiant utilisateur.

Avantageusement, le dispositif de pilotage compare le solde avec la valeur de seuil associée au compte et affiche à l'écran une information d'alerte quand le solde est inférieur à ladite valeur de seuil.

On peut prévoir que la valeur du solde soit affichée à l'écran 19 après que le dispositif d'identification 15 a acquis l'identifiant utilisateur et que le dispositif de pilotage a déterminé le compte utilisateur enregistré correspondant.

Selon un mode de réalisation, une fois l'identifiant acquis et le compte utilisateur correspondant identifié, l'écran 19 affiche le solde avant débit. L'affichage de cette information de solde permet de maintenir le regard de l'utilisateur sur l'écran pour suivre les indications affichées à l'écran. Comme expliqué ci-avant ces informations peuvent être par exemple une invitation à reprendre son plateau pour aller manger (cas nominal) ou pour se diriger vers un autre poste (cas particulier).

Selon un mode de réalisation particulier, on peut aussi prévoir que l'étape d'acquisition de l'identifiant de l'utilisateur s'effectue après la prise d'image. Préférentiellement, il est prévu que le dispositif de pilotage 17 exécute une étape de détermination de l'état de position, correct ou incorrect, du plateau et/ou de son contenu sur la surface de pose préalablement à l'étape d'acquisition d'images.

Comme expliqué dans la demande internationale publiée sous le numéro WO2018073510 (A1), le dispositif de pilotage comprend une unité de traitement et de calcul, telle qu'un ordinateur, une tablette, ou une unité d'un autre type comprenant un processeur ou microprocesseur. Le dispositif de pilotage peut comprendre aussi :
- un bloc de périphériques internes pour interfacer les périphériques du poste avec l'unité de traitement. Lesdits périphériques peuvent comprendre par exemple les dispositifs d'acquisition d'images, tels que des caméras, des capteurs, le système d'éclairage, des voyants, une imprimante, etc...
- un bloc de périphériques externes pour interfacer le poste avec un réseau de communication de données et des périphériques externes, tel qu'un portique d'accès,
- une alimentation électrique.

L'acquisition de l'identifiant utilisateur peut être suivie d'étapes de vérifications associées à cet identifiant, telles qu'une étape de vérification de l'existence d'un compte utilisateur enregistré associé et éventuellement une étape de vérification de l'autorisation d'accès pour l'utilisation dudit poste d'acquisition et/ou de l'état du solde du compte. L'acquisition d'images et/ou le déclenchement d'autres étapes, peut ainsi être conditionné(e) à une ou des étapes de vérification en lien avec l'identifiant.

En particulier, on peut prévoir que l'acquisition d'images soit conditionnée au fait que l'identifiant utilisateur corresponde bien à un identifiant d'un compte utilisateur connu et éventuellement au fait qu'une information d'autorisation d'utilisation du poste d'acquisition ou de l'installation soit associée à cet identifiant utilisateur. On peut prévoir que l'image soit acquise indépendamment du solde et que le solde soit vérifié ensuite, pour, en cas d'insuffisance de solde, indiquer à l'utilisateur de recharger son compte ou d'aller payer à un poste spécifique distinct.

Des données informatiques correspondant respectivement à l'identifiant de l'utilisateur (donnée 316) et aux images acquises associées (données 311, 312, 313) sont alors mémorisées dans une mémoire 3 de système informatique. La mémoire peut être une mémoire locale intégrée au poste d'acquisition ou déportée. L'identifiant acquis de l'utilisateur est ainsi associé aux images acquises. Comme détaillé ci-après, l'association de l'identifiant de l'utilisateur à ces images permet de gérer efficacement et de manière fiable l'achat du ou des produits par l'utilisateur et, si besoin, de contrôler également l'accès au poste.

En particulier, une telle conception de l'installation permet à l'utilisateur de poser son plateau au niveau du poste d'acquisition le temps que les opérations d'acquisition d'identifiant, d'acquisition d'images et d'association soient effectuées, de sorte que l'utilisateur peut ensuite quitter ledit poste d'acquisition pour aller se restaurer, sans que l'utilisateur doive aller à un deuxième poste distinct, hormis dans certains cas particuliers, par exemple lorsque l'utilisateur n'est pas reconnu. Dans ce cas particulier, l'utilisateur peut être invité, par des indications correspondantes affichées à l'écran, à se diriger vers un poste de traitement spécifique où un opérateur est présent.

Selon un aspect particulier, l'installation émet une autorisation de quitter le poste pour aller manger (cas nominal) ou une invitation à se diriger vers un autre endroit, par exemple un poste de traitement spécifique (cas particulier), qui se matérialise par un message affiché et/ou par l'émission d'un signal visuel et/ou auditif, et/ou par l'émission d'un signal de commande d'un système mécanique de contrôle de passage par exemple pour déverrouiller une barrière.

Dans l'exemple illustré aux figures, l'identifiant de l'utilisateur et les images acquises associées font partie d'un ensemble de données 310 désigné dans la suite de la description sous le terme "précommande". Le terme précommande traduit le fait que, lors du passage de l'utilisateur au niveau du poste d'acquisition, des images du plateau et de son contenu ont été mémorisées, mais les produits qui forment le contenu du plateau n'ont pas encore été identifiés et en particulier les données propres à ces produits telles que leur dénomination, leur prix et leur quantité ne sont pas encore mémorisées. Comme expliqué par la suite, il est prévu que ces données de produit soient ajoutées à l'aide du poste de traitement 2 dans un ensemble de données appelé commande.

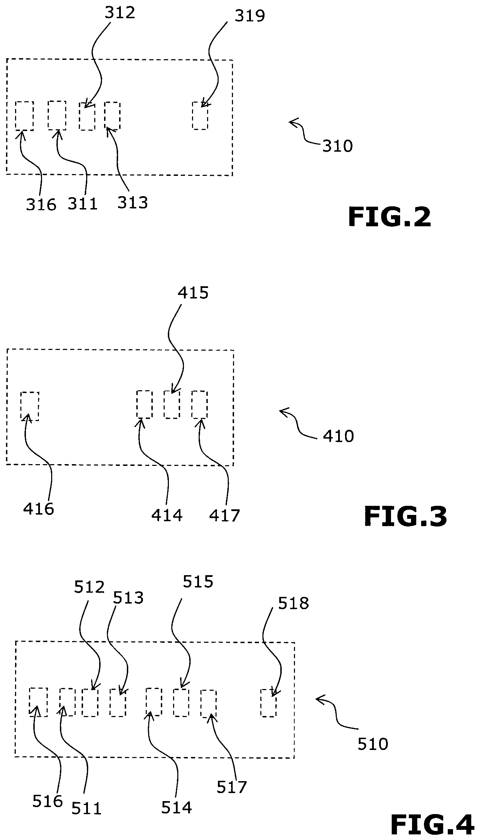

A la figure 2, on a schématisé une précommande 310 qui comprend les données 311, 312, 313 d'images qui peuvent être les images acquises par les appareils 141, 142, 143. On peut prévoir que les images acquises soient prétraitées ou non avant de les enregistrer pour former les données d'images 311, 312, 313. De manière générale une image qui correspond à une prise de vue donnée d'un produit ou d'un ensemble de produits peut subir différents traitements à différentes étapes du fonctionnement de l'installation, par exemple en termes de format et/ou de qualité, tout en étant considérée comme étant une même image par souci de clarté. Selon un mode de réalisation, chaque précommande comprend aussi d'autres données, telle que par exemple la position du plateau dans l'image.

Comme illustré à la figure 1, l'installation comprend aussi un poste 2 de traitement. Selon un aspect particulier, le poste 2 de traitement est distinct et de préférence distant du poste 1 d'acquisition. Selon un mode de réalisation, l'installation comprend plusieurs postes de traitement qui peuvent fonctionner en parallèle les uns des autres. Ainsi, la description ci-après est réalisée pour un poste 2 de traitement mais s'applique bien entendu à une configuration d'installation dans laquelle il y a plusieurs postes de traitement.

Le poste 2 de traitement comprend un écran 20 d'affichage, une interface homme-machine, telle qu'une souris ou une couche tactile de l'écran, une unité de traitement 21, telle qu'un processeur ou microprocesseur, et une alimentation électrique. Le poste de traitement 2 est par exemple formé par un ordinateur sur lequel est installé un logiciel permettant de mettre en œuvre les fonctionnalités détaillées ci-après.

L'unité de traitement 21 est configurée pour afficher à l'écran 20 une interface 200 de traitement de précommande. L'interface 200 de traitement de précommande comprend une zone de navigation 212 comprenant des éléments de navigation 212A permettant de sélectionner une précommande à traiter. La sélection d'une précommande d'un utilisateur permet d'afficher des informations relatives à ladite précommande. En particulier, l'interface 200 de traitement comprend une zone d'affichage d'images 212B correspondant aux données 311, 312, 313 d'image de la précommande sélectionnée.

L'interface de traitement 200 du poste de traitement 2 permet à l'opérateur d'agir sur les images, de manière à manipuler le plateau de manière virtuelle, par exemple en zoomant ou en naviguant dans les images.

Ainsi l'interface de traitement de précommandes permet non seulement de naviguer au sein de la file (ou pile) de précommandes générées à l'aide du poste 1 d'acquisition, mais aussi de naviguer dans ou de manipuler une image associée à une précommande.

L'interface de traitement 200 de précommandes comprend aussi une zone d'affichage d'une information 211 d'identification de l'utilisateur correspondant à une donnée d'identification de l'utilisateur de la précommande. La donnée d'identification de l'utilisateur correspond de manière directe ou indirecte à l'identifiant acquis. Selon un aspect particulier, l'information d'identification de l'utilisateur permet d'identifier un compte associé à l'utilisateur, c'est-à-dire un compte utilisateur correspondant.

L'interface de traitement 200 de précommandes comprend aussi une zone d'affichage 213 d'une pluralité d'éléments de sélection qui comprennent ici des touches de sélection 213A, 213B, 213C, 213D associées chacune à un produit de référence. Chaque produit de référence est un produit susceptible d'être présent sur les images acquises et dont des données - telles que des données d'intitulé, de prix, et/ou de quantité, sont préenregistrées dans une mémoire de l'installation, par exemple lors d'une étape de paramétrage de l'installation.

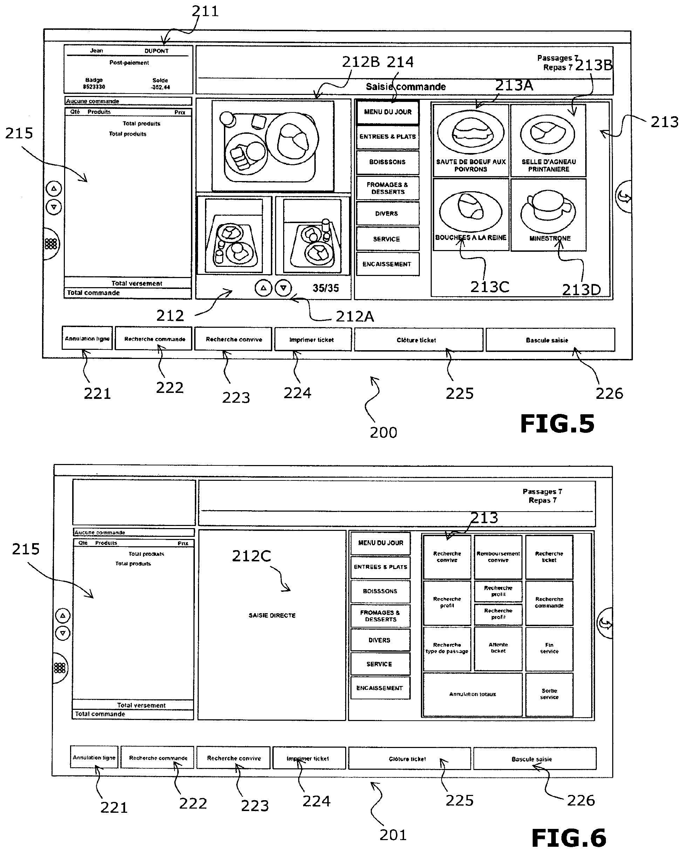

Comme illustré à la figure 5, une touche ou un ensemble de touches 213A, 213B, 213C, 213D de produits de référence peut être accessible depuis une autre touche 214, dite touche de catégorie, correspondant à une catégorie sous laquelle sont regroupés lesdits produits de référence. Ainsi, on peut prévoir que les touches 213A, 213B, 213C, 213D soient affichées lorsque l'utilisateur a cliqué sur la touche 214 « menu du jour » ou encore qu'elles soient affichées par défaut. De même, l'interface comprend d'autres touches de catégories sélectionnables par l'utilisateur pour permettre d'afficher des touches de sélection de produits de référence associées à ces catégories.

L'interface 200 de traitement de précommandes comprend aussi une zone d'affichage, appelée zone de commande 215 de produits. La zone de commande 215 permet, lorsque l'opérateur actionne une touche de sélection associée à un produit de référence, d'afficher des informations du produit de référence correspondant dans ladite zone de commande 215. Ainsi, lorsque l'opérateur clique sur la touche 213A, la zone de commande 215 affiche la dénomination du produit, le prix et la quantité.

En outre, lorsqu'une des touches de sélection, par exemple la touche 213A, est actionnée par l'opérateur, des données de produit de référence associées à cette touche, par exemple la dénomination du produit, le prix et la quantité, sont ajoutées dans la commande 410. Selon un aspect particulier, on peut prévoir que l'ajout de données de produit de référence dans la commande nécessite une validation de l'opérateur.

Selon un mode de réalisation, l'interface de traitement comprend aussi au moins l'une des touches suivantes pour répondre aux besoins de traitement de précommande ou de saisie directe :
- une touche 221 permettant d'annuler une ligne de la zone de commande 215 et d'effacer les données de produit correspondantes dans la commande associée ;
- une touche 222 de recherche de commande pour permettre de rappeler dans l'interface les données d'une commande en attente ou d'une commande clôturée ;
- une touche 223 de recherche d'utilisateur pour associer un utilisateur à une commande à saisir à l'aide de l'interface de saisie directe ;
- une touche 224 permettant d'imprimer un ticket issu d'une commande;
- une touche 225 permettant de clôturer une commande pour générer un ticket ;
- une touche 226 permettant de basculer entre l'interface de traitement de précommandes et l'interface de saisie directe comme expliqué ci-après.

Comme illustré à la figure 3, la commande 410 comprend une donnée 416, correspondant à la donnée d'identification 316 de la précommande 310, et des données, référencées ici 414, 415, 417 correspondant aux données de produit associées à la touche de sélection de produit de référence actionnée par l'utilisateur.

Comme expliqué ci-dessus, à chaque précommande traitée correspond une commande qui comprend des données correspondant à au moins une partie des données de ladite précommande et des données supplémentaires résultant de la sélection d'un ou plusieurs produits de référence. Selon un mode de réalisation, la commande ne reprend pas certaines données de la précommande telles que les données d'images et la donnée de position du plateau par rapport à l'image.

Selon un aspect particulier, chaque précommande 310 comprend aussi une information d'état 319 de la précommande indiquant si la précommande est :
- à traiter ;
- en cours de traitement (une commande étant en cours de construction) ; ou
- traitée (c'est-à-dire lorsque la commande correspondante est clôturée et donc que le ticket a été généré).

Selon un mode de réalisation, le poste de traitement 2 permet à l'opérateur de visualiser l'état de ladite précommande 310. Lorsque l'installation comprend plusieurs postes de traitement, une précommande en cours de traitement par un poste de traitement n'est pas accessible aux autres postes de traitement.

Dans l'exemple illustré aux figures, lesdites commandes sont mémorisées dans une mémoire 4 d'un système informatique qui est distincte de la mémoire 3. En variante, lesdits mémoires peuvent être communes. En outre dans l'exemple schématisé à la figure 1, une commande et la précommande correspondante sont deux entités distinctes. En variante, on peut prévoir qu'une commande et la précommande associée soient une même entité, c'est-à-dire un même ensemble de données, qui est considéré comme une commande lorsqu'une des données dudit ensemble présente une valeur donnée et considéré comme une précommande lorsque ladite donnée présente une autre valeur.

Chaque commande peut être utilisée pour générer un ticket. Chaque ticket correspond à un ensemble de données qui comprend au moins une partie des données d'une précommande et/ou au moins une partie des données de la commande associée à ladite précommande. Chaque ticket comprend aussi une ou plusieurs autres données. Les tickets générés peuvent être stockés dans une mémoire 5 de système informatique.

La mémoire 5 peut être commune ou distincte de la mémoire 3 ou 4. De même le ticket peut être une entité distincte de la commande et/ou de la précommande, ou être une même entité, c'est-à-dire un même ensemble de données qui est alors considéré comme un ticket, une précommande ou une commande en fonction de la valeur prise par une des données dudit ensemble.

Ainsi, un ticket 510 peut être généré à partir de la commande 410 et de la précommande 310 associée. Comme illustré dans le mode de réalisation de la figure 4, le ticket 510 comprend :
- une donnée d'identification de l'utilisateur 516 qui correspond directement ou indirectement à la donnée d'identification 416 ou 316,
- une donnée d'image 512 principale, qui est la vue de dessus du plateau, et des données d'image secondaires 511 et 513 correspondant à des vues latérales opposées du plateau et qui correspondent respectivement aux données 312, 311 et 313 de la précommande ;
- des données de produit 514, 515, 517 correspondant aux données de produit 414, 415 et 417 de la commande.

Le ticket 510 comprend aussi une donnée 518 spécifique, c'est-à-dire non présente dans la commande ou la précommande. Selon un aspect particulier, cette donnée spécifique est une donnée de mode de règlement (par exemple carte bancaire, espèce, paiement par compte) et/ou une donnée fiscale, telle que le numéro d'identification de l'établissement de l'exploitant de l'installation et/ou la version du logiciel qui a permis de générer le ticket.

Comme illustré à la figure 5 et à la figure 6, une touche 226 permet à l'opérateur de basculer entre l'interface de traitement 200 de précommandes et une autre interface, dite interface de saisie directe 201, dans laquelle aucune image de produit(s) acquise par le poste 1 d'acquisition n'est affichée. Dans cette interface de saisie directe, l'opérateur saisit à l'aide de l'interface les données de produit dans la commande sans charger de données de précommande. En particulier, aucune donnée d'image de précommande n'est chargée dans l'interface de saisie directe 201.

Selon un aspect particulier, l'interface de saisie directe 201 reprend les éléments principaux de l'interface de traitement 200 de précommandes, excepté en ce qui concerne les zones 212A et 212B de l'interface de traitement 200 qui sont remplacées dans l'interface de saisie directe 201 par une zone 212C dépourvue d'affichage d'image et d'éléments de navigation dans la pile de précommandes. Ainsi, l'interface de saisie directe ne fait plus apparaitre d'information relatives aux précommandes.

Lors d'une utilisation de l'interface de saisie directe 201, l'unité de traitement 21 génère une commande 420, dite commande directe. Cette commande directe n'est pas associée à une précommande. La commande 420 directe comprend une donnée d'identification d'une personne, et des données de produit(s) de référence correspondant à une ou à chaque touche de sélection de l'interface de saisie directe 201 sollicitée par l'opérateur.

Le bouton 226 permet ainsi de sortir de la gestion des précommandes pour passer en saisie directe (c'est-à-dire sans données de précommandes), et inversement, ce qui permet de ne pas dédier un poste de traitement 2 uniquement au traitement de précommandes 310, mais permet aussi de répondre à des situations particulières où, par exemple, l'utilisateur n'a pas de badge.

Au moins une partie des données d'un ticket est accessible depuis un terminal 6, de préférence via un portail web ou une application mobile, pour permettre à l'utilisateur, auquel correspond par exemple la commande 410 de visualiser des informations 601, 602 associées au ticket. L'utilisateur accède à ces informations associées à son compte par un login et mot de passe correspondant ou par un token d'identification.

Comme illustré à la figure 7 avec l'exemple d'un utilisateur qui souhaite pouvoir vérifier les informations associées à sa transaction, le terminal 6 permet d'afficher des données du ticket, telles que la liste des produits, leur prix, leur quantité et d'autres informations liées au compte de l'utilisateur, telles que son identifiant et le solde du compte correspondant.

L'application affiche aussi une icône 603 qui permet à l'utilisateur d'afficher au moins une image 602 (figure 8) correspondant à l'une des images acquises, de préférence l'image de dessus du plateau et de son contenu, ce qui permet à l'utilisateur de vérifier l'adéquation entre les données de la liste de produits saisis et le contenu dudit plateau. L'utilisateur peut aussi revenir à l'affichage de la liste de produits saisis grâce à l'icône 604. On peut aussi prévoir que l'utilisateur puisse accéder à son ticket via un portail client par l'intermédiaire d'un terminal tel qu'un ordinateur.

Le terminal 6 est par exemple un téléphone intelligent, une tablette ou un ordinateur personnel d'un utilisateur.

Selon un mode de réalisation, le terminal 6 peut être utilisé pour valider une précommande et ainsi générer une commande. Un ticket peut être aussi généré à partir de cette commande.

L'installation peut aussi comprendre un terminal utilisable par l'opérateur via une interface spécifique, telle qu'un portail de gestion, conçue pour consulter des informations correspondant aux tickets, commandes et/ou précommandes. Le terminal peut également être formé par le poste de traitement 2 lui-même.

Du fait de l'architecture d'une telle installation, le poste 1 d'acquisition peut fonctionner indépendamment du poste 2 de traitement. Autrement dit, il n'est pas besoin que le poste 2 de traitement ait finalisé le traitement d'une précommande pour que le poste 1 d'acquisition puisse générer de nouvelles précommandes.

Tant qu'il reste des précommandes à traiter, le poste de traitement 2 peut traiter les précommandes 310 générées, indépendamment de la poursuite ou de l'arrêt de génération de nouvelles précommandes. Le poste de traitement 2 peut ainsi fonctionner indépendamment du poste d'acquisition 1.

Les utilisateurs utilisent le poste d'acquisition 1 individuellement, au sens où un utilisateur dépose son plateau sur la surface de pose, puis le reprend une fois la ou les images acquises, ce qui permet à l'utilisateur suivant de procéder de même. Autrement dit, un utilisateur peut poser son plateau dans la zone de pose lorsque l'utilisateur précédent a retiré le sien.

Selon un mode de réalisation, le dispositif de pilotage 17 est aussi configuré pour, après que l'identifiant a été associé aux images acquises, commander un dispositif 9 d'autorisation de sortie ou d'indication pour permettre ou indiquer à l'utilisateur de reprendre son plateau (pour aller manger).

Autrement dit, quand l'identification de l'utilisateur est effectuée et que les images sont acquises, le poste d'acquisition émet un signal de validation qui est interprétable par un contrôleur que ce contrôleur soit une personne physique (lorsque le signal de validation est un voyant lumineux ou un ticket à présenter) ou un système mécanique de contrôle d'accès, tel qu'un portique.

Dans l'exemple illustré aux figures, le dispositif 9 d'autorisation comprend des voyants qui émettent une lumière d'une couleur donnée, par exemple verte, lorsque l'unité de traitement et de calcul commande l'émission par le ou les voyants de ladite lumière de couleur correspondant à une autorisation de sortie ou de validation de passage.

L'utilisation de voyant comme dispositif d'autorisation (ou validation) permet une supervision du processus par un surveillant. On peut aussi prévoir que lesdits voyants permettent d'identifier le statut du poste (service ouvert ou fermé).

La permission de sortie du plateau est validée par le dispositif de pilotage lorsque l'image acquise du plateau et l'identifiant du porteur du plateau ont été associés. Avantageusement, une condition de validation supplémentaire peut être que l'identifiant corresponde à un utilisateur autorisé à consommer dans le restaurant associé au poste. Une condition de validation supplémentaire peut aussi être que le compte de l'utilisateur correspondant à l'identifiant présente un crédit et/ou autorise un débit suffisant. Ainsi, un seuil prédéterminé de crédit sur le compte ou de débit maximum autorisé peut être introduit comme paramètre de validation.

Différents modes de fonctionnement de l'installation sont envisageables.

Selon un mode de réalisation appliqué par exemple à la restauration collective, l'utilisateur se présente au niveau d'un poste d'acquisition et pose son plateau sur la surface de pose 11. Le poste d'acquisition 1 qui était précédemment en mode d'attente d'activité, détecte, à l'aide du dispositif 14 d'acquisition d'images, un mouvement correspondant à l'introduction du plateau au niveau de la surface de pose. Le poste d'acquisition 1 émet alors des informations interactives d'aide au positionnement du plateau.

Le poste d'acquisition 1 détecte un éventuel contact entre le plateau ou un contenu du plateau et les côtés d'un cadre imaginaire affiché à l'écran 19 en superposition de l'image du plateau.

Le cadre imaginaire est un cadre correspondant aux bords de l'image dans lequel est destiné à être positionné le plateau et son contenu pour être considérés comme correctement positionnés. En cas de contact du plateau ou de son contenu avec un côté dudit cadre, ledit côté est par exemple affiché en rouge et un message de consigne de repositionnement est affiché. Lorsque l'ensemble formé du plateau et de son contenu est correctement positionné dans le cadre, c'est-à-dire à écartement des bords du cadre, celui-ci est par exemple affiché en vert, et un message est affiché à l'écran 19 pour inviter l'utilisateur à présenter son badge.

Ces étapes de vérification et de validation de positionnement du plateau permettent de limiter le temps de traitement des données acquises, puisque ces étapes permettent de s'assurer que les images acquises sont exploitables au niveau du poste 2 de traitement, tandis que l'utilisateur est guidé au cours de ces étapes, de sorte que le temps de passage de l'utilisateur au niveau du poste 1 d'acquisition est réduit.

L'utilisateur présente alors son badge 16 devant le lecteur 15. Après une étape de vérification de droit de passage en fonction du compte associé au badge et éventuellement en fonction de son solde, le dispositif d'acquisition 14 prend alors des images du plateau et de son contenu suivant des angles différents.

Les prises de vues selon trois angles différents fournissent à l'opérateur du poste de traitement une vision globale du plateau et de son contenu.

Une fois les opérations d'acquisition achevées, l'utilisateur peut retirer son plateau et aller manger, tandis qu'un autre utilisateur peut positionner son plateau sur la surface de pose du poste d'acquisition.

Lesdites données acquises par le poste d'acquisition 1 au cours du passage d'un utilisateur forment une précommande mémorisée et accessible par le poste de traitement 2. Après passage de plusieurs utilisateurs, on obtient ainsi une pile de précommandes.

Un opérateur présent au niveau du poste de traitement 2 peut alors traiter une précommande qu'il peut sélectionner à l'aide de la zone de navigation de l'interface de traitement 200 ou qui peut être automatiquement sélectionnée par le poste 2 de traitement.

L'interface de traitement 200 permet à l'opérateur de naviguer dans la pile de précommandes et de traiter chaque précommande en saisissant dans une commande correspondante, les données des produits qui correspondent aux produits présents dans les images affichées à l'écran qui sont issues de la précommande. La saisie de données de produit dans une commande correspond à l'écriture dans la mémoire de commandes desdites données de produit en les associant avec les données déjà présentes dans la commande.

Lors de la sélection d'une précommande dans l'interface de traitement 200, les images acquises contenues dans la précommande sont affichées, et l'opérateur peut saisir, c'est-à-dire ajouter dans une commande correspondant à la précommande, à l'aide des touches de sélection de l'interface de traitement 200, des données correspondant aux dénominations, prix et quantités des produits présents sur les images pour construire la commande. Lorsque l'opérateur considère que la commande est achevée, c'est-à-dire lorsque les données de produit de référence correspondant aux produits présents sur les images ont été saisies (ajoutées) dans la commande, l'opérateur peut clôturer la commande.

A la clôture de la commande, un ticket est généré. Ce ticket reprend les données de dénomination, prix et quantité des produits issues de la commande, auxquelles sont ajoutées des données spécifiques correspondant par exemple à des données fiscales (TVA) et/ou de mode de règlement. Une image de préférence en basse résolution et correspondant à l'une des images de la précommande est aussi incluse dans les données du ticket. Le ticket est accessible à l'utilisateur qui peut le consulter depuis un terminal, tel que son téléphone, et/ou l'imprimer depuis une borne correspondante. Les données de produit incluses dans le ticket et l'image du plateau correspondant sont aussi consultables par l'opérateur, par exemple depuis un portail de gestion accessible depuis un terminal, tel que le poste de traitement.

On peut prévoir qu'un montant relatif au prix des produits issus de la commande soit débité du compte utilisateur correspondant.

En cas de contestation sur un ticket, on peut prévoir que l'opérateur puisse modifier la commande, et corriger le ticket existant ou émettre un nouveau ticket correspondant.

Selon un aspect particulier, on peut prévoir que le poste de traitement 2 est associé ou comprend un lecteur d'identifiant, tel qu'un lecteur de badge, de sorte que lorsque l'identifiant est lu par ce lecteur, le poste de traitement 2 déclenche, par rapport à la pile de précommandes, un positionnement automatique de la zone de navigation de l'interface de traitement sur la précommande correspondant audit identifiant de badge. Une telle configuration permet lorsqu'un utilisateur souhaite modifier une commande, de charger automatiquement dans l'interface de traitement les données relatives à la précommande correspondante. Une telle configuration permet aussi de gérer le cas d'utilisateurs pour lesquels une précommande a été générée mais qui doivent passer par le poste de traitement pour clôturer la commande correspondante, par exemple du fait d'un solde insuffisant.

Comme rappelé ci-dessus, il est possible de coupler plusieurs postes d'acquisition, tandis qu'un seul poste de traitement est utilisé par un opérateur pour traiter les précommandes issues des différents postes d'acquisition. Une telle conception de l'installation permet d'augmenter encore les capacités de passage en caisse. Il est aussi possible de prévoir que l'installation comprend plusieurs postes de traitement permettant à plusieurs opérateurs d'accéder à une pile unique de précommandes.

Les fonctions et étapes décrites ci-dessus peuvent être mise en œuvre sous forme de programme informatique ou via des composants matériels (p. ex. des réseaux de portes programmables). En particulier, les fonctions et étapes opérées par le poste d'acquisition et le poste de traitement, et en particulier par leur unité de pilotage ou de traitement, peuvent être réalisées par des jeux d'instructions informatiques implémentées dans un (micro)processeur ou contrôleur ou être réalisées par des composants électroniques dédiés ou des composants de type FPGA ou ASIC. Il est aussi possible de combiner des parties informatiques et des parties électroniques.

Les programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent aussi être exécutés à partir de périphériques de stockage de programme.

Selon un aspect particulier, les précommmandes, commandes et tickets sont mémorisés sous forme d'une ou plusieurs base(s) de données.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Installation comprenant :
• un poste (1) d'acquisition permettant, pour plusieurs utilisateurs successifs, d'acquérir des données relatives à un produit ou ensemble de produits, tel que le contenu d'un plateau repas, de chaque utilisateur,
ledit poste (1) d'acquisition comprenant :
- une surface de pose (11) permettant à l'utilisateur de poser ledit produit ou ensemble de produits ;
- un dispositif (14) d'acquisition d'images orienté vers la surface de pose (11) ;
- un dispositif d'identification (15) permettant d'identifier l'utilisateur ;
- un dispositif de pilotage (17) configuré pour, pour chaque utilisateur :
- acquérir un identifiant de l'utilisateur associé à un compte utilisateur ;
- acquérir une image dudit produit ou ensemble de produits avec le dispositif (14) d'acquisition d'images, avant ou après l'étape d'acquisition de l'identifiant de l'utilisateur ;
• une mémoire (3) dans laquelle est mémorisé, pour chaque utilisateur, un ensemble de données, appelé précommande (310), ladite précommande comprenant une donnée (316) correspondant à l'identifiant de l'utilisateur et une donnée (311) correspondant à l'image acquise ;
• une mémoire (4) dans laquelle sont mémorisés des ensembles de données, appelés commandes, chaque commande comprenant au moins une partie des données d'une précommande ;
**caractérisée en ce que** l'installation comprend :
• un poste (2) de traitement comprenant un écran (20) d'affichage, une interface homme-machine et une unité de traitement (21) configurée pour afficher à l'écran (20), une interface de traitement de précommande (200) qui comprend :
- une zone de navigation (212A) permettant de sélectionner une précommande ;
- une zone d'affichage d'images (212B) permettant d'afficher l'image de la précommande ;
- une zone d'affichage d'identifiant (211) pour afficher une donnée d'identification de l'utilisateur auquel est associée la précommande ;
- des éléments de sélection (213A) associés chacun à un produit de référence,
- une zone d'affichage, appelée zone de commande (215) ;
ladite unité de traitement (21) du poste (2) de traitement étant aussi configurée pour, lorsqu'un desdits éléments de sélection (213A) est sollicité par l'opérateur, afficher une donnée du produit de référence correspondant dans ladite zone de commande (215), et ajouter, dans une commande (410) associée à la précommande (310), la donnée dudit produit de référence ;
l'installation étant configurée pour débiter le compte utilisateur associé à l'identifiant utilisateur de la précommande sélectionnée d'un montant relatif au prix des produits de référence ajoutés dans la commande ;
**en ce que** le poste (1) d'acquisition est configuré pour fonctionner indépendamment du poste (2) de traitement ;
**en ce que** le poste de traitement (2) est configuré pour permettre de traiter des précommandes (310) générées, indépendamment de la poursuite ou de l'arrêt de fonctionnement du poste d'acquisition (1),
et **en ce que** ledit poste de traitement (2) est configuré pour permettre de basculer entre l'interface de traitement de précommandes (200) et une autre interface, dite interface de saisie directe (201), dans laquelle aucune image de produit(s) acquise par le poste d'acquisition (1) n'est affichée,
ladite unité de traitement (21) étant configurée pour, lors d'une utilisation de l'interface de saisie directe (201), générer un ensemble de données, appelé commande directe (420), qui inclut au moins une donnée d'un produit de référence correspondant à un élément de sélection (213A) sollicité par l'opérateur.

2. Installation selon la revendication 1, **caractérisée en ce que** l'installation comprend une base de données (700) de comptes utilisateurs dans laquelle sont enregistrées des données de comptes utilisateurs, chaque compte utilisateur (CU1) comprenant :
- un identifiant d'un utilisateur (701) ;
- une valeur de solde (702), créditeur ou débiteur ;
et **en ce que** le dispositif de pilotage (17) est configuré pour déterminer si l'identifiant (601) de l'utilisateur acquis correspond à l'identifiant de l'utilisateur (701) d'un compte utilisateur enregistré.

3. Installation selon la revendication 2, **caractérisée en ce que** chaque compte utilisateur (CU1) comprend une information de droit d'utilisation (703) pour indiquer si l'utilisateur associé au compte utilisateur (CU1) est autorisé ou non à utiliser ledit poste d'acquisition ou l'installation,
et **en ce que** le dispositif de pilotage (17) est configuré pour, après avoir déterminé si le compte utilisateur (CU1) correspond à l'identifiant de l'utilisateur (601) acquis, autoriser ou non l'utilisation du poste d'acquisition ou de l'installation en fonction de l'information de droit d'utilisation (703) associée audit compte utilisateur (CU1).

4. Installation selon l'une des revendications précédentes, l'installation comprend une mémoire (5) dans laquelle sont mémorisés des ensembles de données appelés tickets (510), chaque ticket (510) comprenant au moins une partie des données d'une commande (410) et/ou une partie des données de la précommande associée (310),
et en ce qu'au moins une partie des données d'un ticket associé à un utilisateur est accessible depuis un terminal (6).

5. Installation selon l'une des revendications précédentes, **caractérisée en ce que** l'unité de traitement (21) est configurée pour, lorsque l'identifiant d'un utilisateur est saisi ou détecté, et qu'une précommande est associée audit identifiant, sélectionner automatiquement ladite précommande en affichant les données d'identification et d'image correspondantes dans l'interface de traitement (200) de précommandes.

6. Installation selon l'une des revendications précédentes, **caractérisée en ce que** ledit poste de traitement (2) est configuré pour permettre à l'opérateur d'agir sur l'image, par exemple en zoomant ou en naviguant dans l'image.

7. Installation selon l'une des revendications précédentes, **caractérisée en ce que** chaque précommande (310) comprend une information d'état (319) de la précommande indiquant si la précommande est :
- à traiter ; ou
- en cours de traitement, ou
- traitée ;
et **en ce que** le poste de traitement (2) est configuré pour filtrer les précommandes à afficher dans l'interface de traitement en fonction de leur statut.

8. Installation selon l'une des revendications précédentes, **caractérisée en ce que**, chaque produit de référence comprend une donnée de dénomination du produit, une donnée de prix et une donnée de quantité,
ladite unité de traitement (21) du poste de traitement (2) est configurée pour ajouter ces données de dénomination du produit, de prix et de quantité dans la commande (410) lorsque ledit produit de référence est sélectionné dans l'interface de traitement (200) de précommandes.

9. Installation selon l'une des revendications précédentes, **caractérisée en ce que**, ladite précommande (310) comprenant aussi, pour chaque image, une donnée de position relative du produit ou de l'ensemble de produits par rapport à ladite image,
ledit poste de traitement (2) est configuré pour afficher dans la zone d'image (212B) de l'interface de traitement (200) une vue agrandie de ladite image en fonction de ladite donnée de position.

10. Installation selon l'une des revendications précédentes, **caractérisée en ce que**, le poste d'acquisition (1) comprenant un écran (19) d'affichage et le dispositif d'acquisition (14) d'images comprenant une caméra, l'unité de pilotage (17) est configurée pour :
- déclencher l'affichage à l'écran (19) de l'image filmée par la caméra lorsque l'insertion du produit ou de l'ensemble de produits au niveau de la surface de pose est détectée ;
- déclencher l'arrêt de l'affichage de l'image filmée lorsque le produit ou l'ensemble de produits est retiré de la surface de pose.

11. Installation selon l'une des revendications précédentes, **caractérisée en ce que** le poste de traitement (2) est configuré pour permettre de modifier les commandes correspondant aux précommandes traitées.

12. Installation selon l'une des revendications précédentes, **caractérisée en ce que** l'installation comprend plusieurs postes de traitement (2) et/ou plusieurs postes d'acquisition (1).

13. Procédé de gestion de données de produits, mis en œuvre à l'aide d'une installation conforme à l'une des revendications précédentes,
**caractérisé en ce que** le procédé comprend la génération de précommandes (310) à l'aide du poste d'acquisition (1),
et **en ce que** le procédé comprend, à l'aide du poste de traitement (2), les étapes suivantes :
- afficher une image d'une précommande (310) dans la zone d'affichage d'images (212B) de l'interface de traitement (200) ;
- à l'aide des éléments de sélection (213A) de l'interface de traitement (200) du poste de traitement (2), ajouter dans une commande (410) associée à la précommande, des données d'un produit de référence correspondant à un produit présent dans l'image affichée.

14. Procédé selon la revendication 13, **caractérisé en ce que** les étapes réalisées à l'aide du poste de traitement (2) sont réalisées de manière asynchrone par rapport à celle(s) réalisée(s) avec le poste d'acquisition (1).

## Patentansprüche

1. Anlage, die Folgendes beinhaltet:
• eine Erfassungsstation (1), die es gestattet, für mehrere aufeinanderfolgende Benutzer Daten über ein Produkt oder einen Satz Produkte, wie etwa den Inhalt eines Essenstabletts, jedes Benutzers zu erfassen, wobei die Erfassungsstation (1) Folgendes beinhaltet:
- eine Ablagefläche (11), die es dem Benutzer gestattet, das Produkt oder den Satz Produkte abzulegen;
- eine Bilderfassungsvorrichtung (14), die zu der Ablagefläche (11) hin ausgerichtet ist;
- eine Identifikationsvorrichtung (15), die es gestattet, den Benutzer zu identifizieren;
- eine Steuervorrichtung (17), die für jeden Benutzer zu Folgendem konfiguriert ist:
- Erfassen einer Kennung des Benutzers, die mit einem Benutzerkonto assoziiert ist;
- Erfassen eines Bildes des Produkts oder des Satzes Produkte mit der Bilderfassungsvorrichtung (14), vor oder nach dem Schritt des Erfassens der Kennung des Benutzers;
• einen Speicher (3), in dem für jeden Benutzer ein Datensatz, als Vorbestellung (310) bezeichnet, gespeichert wird, wobei die Vorbestellung ein Datenelement (316), das der Kennung des Benutzers entspricht, und ein Datenelement (311), das dem erfassten Bild entspricht, beinhaltet;
• einen Speicher (4), in dem Datensätze, als Bestellungen bezeichnet, gespeichert werden, wobei jede Bestellung mindestens einen Teil der Daten einer Vorbestellung beinhaltet;
**dadurch gekennzeichnet, dass** die Anlage Folgendes beinhaltet:
• eine Bearbeitungsstation (2), beinhaltend einen Anzeigebildschirm (20), eine Mensch-Maschine-Schnittstelle und eine Bearbeitungseinheit (21), die dazu konfiguriert ist, auf dem Bildschirm (20) eine Schnittstelle zur Bearbeitung einer Vorbestellung (200) anzuzeigen, die Folgendes beinhaltet:
- einen Navigationsbereich (212A), der es gestattet, eine Vorbestellung auszuwählen;
- einen Bildanzeigebereich (212B), der es gestattet, das Bild der Vorbestellung anzuzeigen;
- einen Kennungsanzeigebereich (211), um ein Datenelement zur Identifikation des Benutzers anzuzeigen, mit dem die Vorbestellung assoziiert ist;
- Auswahlelemente (213A), die jeweils mit einem Referenzprodukt assoziiert sind,
- einen Anzeigebereich, der als Bestellungsbereich (215) bezeichnet wird;
wobei die Bearbeitungseinheit (21) der Bearbeitungsstation (2) ferner dazu konfiguriert ist, wenn eines der Auswahlelemente (213A) durch den Bediener aktiviert wird, ein Datenelement des entsprechenden Referenzprodukts in dem Bestellungsbereich (215) anzuzeigen und das Datenelement des Referenzprodukts zu einer mit der Vorbestellung (310) assoziierten Bestellung (410) hinzuzufügen;
wobei die Anlage dazu konfiguriert ist, das Benutzerkonto, das mit der Benutzerkennung der ausgewählten Vorbestellung assoziiert ist, mit einem Betrag zu belasten, der dem Preis der zu der Bestellung hinzugefügten Referenzprodukte entspricht;
dass die Erfassungsstation (1) dazu konfiguriert ist, unabhängig von der Bearbeitungsstation (2) zu arbeiten; dass die Bearbeitungsstation (2) dazu konfiguriert ist, die Bearbeitung von erzeugten Vorbestellungen (310) unabhängig von einem fortgesetzten oder gestoppten Betrieb der Erfassungsstation (1) zu gestatten,
und dass die Bearbeitungsstation (2) dazu konfiguriert ist, das Wechseln zwischen der Schnittstelle zur Bearbeitung von Vorbestellungen (200) und einer anderen Schnittstelle, als direkte Eingabeschnittstelle (201) bezeichnet, zu gestatten, in der kein durch die Erfassungsstation (1) erfasstes Bild eines oder mehrerer Produkte angezeigt wird,
wobei die Bearbeitungseinheit (21) dazu konfiguriert ist, bei einer Nutzung der direkten Eingabeschnittstelle (201) einen Datensatz, als direkte Bestellung (420) bezeichnet, zu erzeugen, der mindestens ein Datenelement eines Referenzprodukts umfasst, das einem durch den Bediener aktivierten Auswahlelement (213A) entspricht.

2. Anlage nach Anspruch 1, **dadurch gekennzeichnet, dass** die Anlage eine Datenbank (700) mit Benutzerkonten beinhaltet, in der Daten von Benutzerkonten gespeichert sind, wobei jedes Benutzerkonto (CU1) Folgendes beinhaltet:
- eine Kennung eines Benutzers (701);
- einen Saldowert (702), Haben oder Soll;
und dass die Steuervorrichtung (17) dazu konfiguriert ist, zu bestimmen, ob die erfasste Kennung (601) des Benutzers der Kennung des Benutzers (701) eines registrierten Benutzerkontos entspricht.

3. Anlage nach Anspruch 2, **dadurch gekennzeichnet, dass** jedes Benutzerkonto (CU1) eine Information über eine Nutzungsberechtigung (703) beinhaltet, um anzuzeigen, ob es dem mit dem Benutzerkonto (CU1) assoziierten Benutzer erlaubt ist oder nicht, die Erfassungsstation oder die Anlage zu nutzen,
und dass die Steuervorrichtung (17) dazu konfiguriert ist, nach dem Bestimmen, ob das Benutzerkonto (CU1) der erfassten Kennung des Benutzers (601) entspricht, die Nutzung der Erfassungsstation oder der Anlage in Abhängigkeit von der Information über eine Nutzungsberechtigung (703), die mit dem Benutzerkonto (CU1) assoziiert ist, zu erlauben oder nicht.

4. Anlage nach einem der vorhergehenden Ansprüche, wobei die Anlage einen Speicher (5) beinhaltet, in dem Datensätze, als Tickets (510) bezeichnet, gespeichert werden, wobei jedes Ticket (510) mindestens einen Teil der Daten einer Bestellung (410) und/oder einen Teil der Daten der assoziierten Vorbestellung (310) beinhaltet,
und wobei auf mindestens einen Teil der Daten eines mit einem Benutzer assoziierten Tickets mit einem Endgerät (6) zugegriffen werden kann.

5. Anlage nach einem der vorhergehenden Ansprüche, **dadurch gekennzeichnet, dass** die Bearbeitungseinheit (21) dazu konfiguriert ist, wenn die Kennung eines Benutzers eingegeben oder detektiert wird und eine Vorbestellung mit der Kennung assoziiert ist, die Vorbestellung automatisch auszuwählen und die entsprechenden Identifikations- und Bilddaten in der Schnittstelle zur Bearbeitung (200) von Vorbestellungen anzuzeigen.

6. Anlage nach einem der vorhergehenden Ansprüche, **dadurch gekennzeichnet, dass** die Bearbeitungsstation (2) dazu konfiguriert ist, dem Bediener zu gestatten, mit dem Bild zu interagieren, zum Beispiel durch Zoomen oder durch Navigieren in dem Bild.

7. Anlage nach einem der vorhergehenden Ansprüche, **dadurch gekennzeichnet, dass** jede Vorbestellung (310) eine Zustandsinformation (319) über die Vorbestellung beinhaltet, die angibt, ob die Vorbestellung:
- noch zu bearbeiten ist; oder
- sich in Bearbeitung befindet oder
- bearbeitet wurde;
und dass die Bearbeitungsstation (2) dazu konfiguriert ist, die in der Bearbeitungsschnittstelle anzuzeigenden Vorbestellungen in Abhängigkeit von ihrem Status zu filtern.

8. Anlage nach einem der vorhergehenden Ansprüche, **dadurch gekennzeichnet, dass** jedes Referenzprodukt ein Datenelement zur Bezeichnung des Produkts, ein Datenelement zum Preis und ein Datenelement zur Quantität beinhaltet,
die Bearbeitungseinheit (21) der Bearbeitungsstation (2) dazu konfiguriert ist, diese Daten zur Bezeichnung des Produkts, zum Preis und zur Quantität der Bestellung (410) hinzuzufügen, wenn das Referenzprodukt in der Schnittstelle zur Bearbeitung (200) von Vorbestellungen ausgewählt wird.

9. Anlage nach einem der vorhergehenden Ansprüche, **dadurch gekennzeichnet, dass** die Vorbestellung (310) für jedes Bild ferner ein Datenelement zur relativen Position des Produkts oder des Satzes Produkte in Bezug auf das Bild beinhaltet,
die Bearbeitungsstation (2) dazu konfiguriert ist, in dem Bildbereich (212B) der Bearbeitungsschnittstelle (200) eine vergrößerte Ansicht des Bildes in Abhängigkeit von dem Positionsdatenelement anzuzeigen.

10. Anlage nach einem der vorhergehenden Ansprüche, **dadurch gekennzeichnet, dass**, wobei die Erfassungsstation (1) einen Anzeigebildschirm (19) beinhaltet und die Bilderfassungsvorrichtung (14) eine Kamera beinhaltet, die Steuereinheit (17) zu Folgendem konfiguriert ist:
- Auslösen der Anzeige, auf dem Bildschirm (19), des von der Kamera gefilmten Bildes, wenn das Einschieben des Produkts oder des Satzes Produkte in den Bereich der Ablagefläche detektiert wird;
- Auslösen der Beendigung der Anzeige des gefilmten Bildes, wenn das Produkt oder der Satz Produkte von der Ablagefläche entfernt wird.

11. Anlage nach einem der vorhergehenden Ansprüche, **dadurch gekennzeichnet, dass** die Bearbeitungsstation (2) dazu konfiguriert ist, das Modifizieren der Bestellungen, die den bearbeiteten Vorbestellungen entsprechen, zu gestatten.

12. Anlage nach einem der vorhergehenden Ansprüche, **dadurch gekennzeichnet, dass** die Anlage mehrere Bearbeitungsstationen (2) und/oder mehrere Erfassungsstationen (1) beinhaltet.

13. Verfahren zur Verwaltung von Produktdaten, das mit Hilfe einer Anlage nach einem der vorhergehenden Ansprüche umgesetzt wird,
**dadurch gekennzeichnet, dass** das Verfahren die Erzeugung von Vorbestellungen (310) mit Hilfe der Erfassungsstation (1) beinhaltet,
und dass das Verfahren, mit Hilfe der Bearbeitungsstation (2), die folgenden Schritte beinhaltet:
- Anzeigen eines Bildes einer Vorbestellung (310) in dem Bildanzeigebereich (212B) der Bearbeitungsschnittstelle (200);
- mit Hilfe der Auswahlelemente (213A) der Bearbeitungsschnittstelle (200) der Bearbeitungsstation (2), Hinzufügen von Daten eines Referenzprodukts, das einem in dem angezeigten Bild vorhandenen Produkt entspricht, zu einer mit der Vorbestellung assoziierten Bestellung (410).

14. Verfahren nach Anspruch 13, **dadurch gekennzeichnet, dass** die mit Hilfe der Bearbeitungsstation (2) durchgeführten Schritte in Bezug auf den oder die mit der Erfassungsstation (1) durchgeführten Schritte asynchron durchgeführt werden.

## Claims

1. An installation comprising:
• an acquisition station (1) making it possible, for several successive users, to acquire data relating to a product or a set of products, such as the content of a meal tray, of each user,
said acquisition station (1) comprising:
- a laying surface (11) allowing the user to lay down said product or set of products;
- an image acquisition device (14) oriented toward the laying surface (11);
- an identification device (15) making it possible to identify the user;
- a control device (17) configured, for each user, to:
- acquire an identifier of the user associated with a user account;
- acquire an image of said product or set of products with the image acquisition device (14), before or after the step of acquisition of the identifier of the user;
• a memory (3) in which is stored, for each user, a set of data, called preorder (310), said preorder comprising a datum (316) corresponding to the identifier of the user and a datum (311) corresponding to the acquired image;
• a memory (4) in which are stored sets of data, called orders, each order comprising at least a part of the data of a preorder;
**characterised in that** the installation comprises:
• a processing station (2) comprising a display screen (20), a human-machine interface and a processing unit (21) configured to display, on the screen (20), a preorder processing interface (200) which comprises:
- a navigation zone (212A) making it possible to select a preorder;
- an image display zone (212B) making it possible to display the image of the preorder;
- an identifier display zone (211) for displaying an identification datum of the user with which the preorder is associated;
- selection elements (213A) each associated with a reference product,
- a display zone, called order zone (215);
said processing unit (21) of the processing station (2) being also configured to, when one of said selection elements (213A) is invoked by the operator, display a datum of the corresponding reference product in said order zone (215), and add, in an order (410) associated with the preorder (310), the datum of said reference product;
the installation being configured to debit the user account associated with the user identifier of the selected preorder with an amount relating to the price of the reference products added in the order;
**in that** the acquisition station (1) is configured to function independently of the processing station (2);
**in that** the processing station (2) is configured to make it possible to process preorders (310) that have been generated, independently of whether the acquisition station (1) is continuing to operate or has stopped;
and **in that** said processing station (2) is configured to make it possible to switch between the preorder processing interface (200) and another interface, called direct input interface (201), in which no image of product(s) acquired by the acquisition station (1) is displayed,
said processing unit (21) being configured to, upon a use of the direct input interface (201), generate a set of data, called direct order (420), which includes at least one datum of a reference product corresponding to a selection element (213A) invoked by the operator.

2. The installation as claimed in claim 1, **characterized in that** the installation comprises a database (700) of user accounts in which are recorded user account data, each user account (CU1) comprising:
- an identifier of a user (701);
- a balance value (702), credit or debit;
and **in that** the control device (17) is configured to determine whether the identifier (601) of the user that has been acquired corresponds to the identifier of the user (701) of a recorded user account.

3. The installation as claimed in claim 2, **characterized in that** each user account (CU1) comprises right-of-use information (703) to indicate whether the user associated with the user account (CU1) is or is not authorized to use said acquisition station or the installation,
and **in that** the control device (17) is configured to, after having determined whether the user account (CU1) corresponds to the identifier of the user (601) that has been acquired, authorize or not authorize the use of the acquisition station or of the installation as a function of the right-of-use information (703) associated with said user account (CU1).

4. The installation as claimed in one of the preceding claims, the installation comprises a memory (5) in which are stored sets of data called tickets (510), each ticket (510) comprising at least a part of the data of an order (410) and/or a part of the data of the associated preorder (310),
and in that at least a part of the data of a ticket associated with a user is accessible from a terminal (6).

5. The installation as claimed in one of the preceding claims, **characterized in that** the processing unit (21) is configured to, when the identifier of a user is input or detected, and a preorder is associated with said identifier, automatically select said preorder by displaying the corresponding identification and image data in the preorder processing interface (200).

6. The installation as claimed in one of the preceding claims, **characterized in that** said processing station (2) is configured to allow the operator to act on the image, for example by zooming or navigating in the image.

7. The installation as claimed in one of the preceding claims, **characterized in that** each preorder (310) comprises preorder status information (319) indicating whether the preorder is:
- to be processed; or
- currently being processed, or
- processed;
and **in that** the processing station (2) is configured to filter the preorders to be displayed in the processing interface as a function of their status.

8. The installation as claimed in one of the preceding claims, **characterized in that**, each reference product comprises a product naming datum, a price datum and a quantity datum,
said processing unit (21) of the processing station (2) is configured to add these product naming, price and quantity data into the order (410) when said reference product is selected in the preorder processing interface (200).

9. The installation as claimed in one of the preceding claims, **characterized in that**, said preorder (310) also comprising, for each image, a position datum relating to the product or the set of products relative to said image,
said processing station (2) is configured to display, in the image zone (212B) of the processing interface (200), an enlarged view of said image as a function of said position datum.

10. The installation as claimed in one of the preceding claims, **characterized in that**, the acquisition station (1) comprising a display screen (19) and the image acquisition device (14) comprising a camera, the control unit (17) is configured to:
- trigger the display on the screen (19) of the image filmed by the camera when the introduction of the product or of the set of products on the laying surface is detected;
- trigger the stopping of the display of the filmed image when the product or the set of products is removed from the laying surface.

11. The installation as claimed in one of the preceding claims, **characterized in that** the processing station (2) is configured to make it possible to modify the orders corresponding to the preorders that have been processed.

12. The installation as claimed in one of the preceding claims, **characterized in that** the installation comprises several processing stations (2) and/or several acquisition stations (1).

13. A product data management method, implemented using an installation according to one of the preceding claims,
**characterized in that** the method comprises the generation of preorders (310) using the acquisition station (1),
and **in that** the method comprises, using the processing station (2), the following steps:
- displaying an image of a preorder (310) in the image display zone (212B) of the processing interface (200);
- using selection elements (213A) of the processing interface (200) of the processing station (2), adding, into an order (410) associated with the preorder, data of a reference product corresponding to a product present in the displayed image.

14. The method as claimed in claim 13, **characterized in that** the steps performed using the processing station (2) are performed asynchronously with respect to that or those performed with the acquisition station (1).
